# EUROPEAN PATENT SPECIFICATION

(11) **EP 0 863 349 B1**
(45) Date of publication and mention of the grant of the patent: **20.02.2002**
(21) Application number: 98301678.3
(22) Date of filing: 06.03.1998
(51) Int. Cl.: F16L 1/00, F16L 5/00

(54) **Assembly for making wall-traversing duct**
Baueinheit zum Herstellen einer Wanddurchführung
Assemblage pour montage de tuyauterie à travers une cloison

(30) Priority: 07.03.1997 GB 9704781
(43) Date of publication of application: 09.09.1998
(73) Proprietor: Polysleeve Products Limited, Groby, Leicester LE6 0GN (GB)
(72) Inventor: Davidson, Paul Anthony, Macclesfield, cheshire SK10 2UN (GB)
(74) Representative: Harrison Goddard Foote

(56) References cited:
- WO-A-95/27165
- DE-U- 29 600 144
- FR-A- 2 140 929

## Description

### FIELD OF THE INVENTION

This invention relates to duct assemblies and more particularly, to assemblies to provide a duct extending through a wall or partition and within which may extend a pipe or cable.

WO95/27165 describes a duct comprising a sleeve and outwardly extending annular flanges lockingly engageable directly with the sleeve and adapted to overlie opposed outer surfaces of a wall at opposite ends of the sleeve.

### STATEMENTS OF INVENTION

According to the present invention there is provided a duct assembly comprising an externally grooved, plastics sleeve and at least one sleeve end arrangement, which arrangement includes a collar having an internal groove engaging portion and, engageable with said collar, an annular end cap characterised in that the collar is part annular and the endcap and the part annular collar are engageable by means of a snap fit connection, the snap fit connection being achieved by engagement between an integral, axially extending and peripherally grooved extension of said collar with an integral internal, peripheral flange provided on the end cap.

The present invention also provides a method of installing a wall or partition traversing duct for a cable or pipe according to claim 1, the method comprising providing a length of externally grooved plastics sleeve in a wall or partition traversing location, mounting a part annular collar, having a groove engaging portion, on the sleeve where it emerges from one side of the wall or partition, severing the sleeve flush to said collar and mounting an annular end cap on said collar, said collar and said end cap being engageable with each other.

Accordingly, the invention provides a very simple duct assembly, and method for its installation, which typically comprises only five components, namely, a sleeve and, for each end of the duct, a part annular collar, or circlip, and an end cap.

Preferably, the part annular collar and the end cap are made of plastics material by a moulding, machining or other suitable operation.

### DESCRIPTION OF SPECIFIC EMBODIMENT

The present invention will now be described, by way of example only, and with reference to the accompanying drawings, in which:-
Figure 1 shows the components of a duct assembly in accordance with the present invention;
Figure 2 is a perspective view of a circlip forming part of the duct assembly of Figure 1;
Figure 3 is a cross-section on the line A-A' of the circlip of Figure 2;
Figure 4 is a perspective view of the end cap of the duct assembly of Figure 1; and
Figure 5 is a cross-section of the end cap of Figure 4 on the line B-B'.

Referring to the accompanying drawings, a duct assembly in accordance with the present invention includes a plastic sleeve 1 having grooves 3 spaced apart along its length, these grooves being provided by radially extending circumferencial projections 5. These projections may be provided on the outer surface only of the plastic sleeve but may also have corresponding grooves on the inner surface, the plastic sleeve being, in effect, a corrugated tube. Typically, sleeve 1 is made of thin plastic material and is both flexible and resilient. It may be provided in long lengths wound on drums. It can be easily cut at any desired position along its length.

Plastics sleeve 1 forms part of the duct assembly of the invention. In use, a suitable length of sleeve 1 extends across a wall or partition and surrounds a cable or pipe extending through the wall or partition. Sleeve 1 may be slit longitudinally, particularly where the pipe or cable is already in position and the sleeve can then be fitted around the pipe or cable. Where the pipe or cable is not already in position then the sleeve may be located in position without slitting it longitudinally and the pipe or cable fed through the installed sleeve.

In order to install the sleeve 1 firmly in position within the wall or partition, a duct assembly of the invention is also provided with at least one sleeve end arrangement comprising a part annular collar or circlip 7 and an end cap 9. The circlip 7 is part annular in order that it may be located on the sleeve by relative transverse movement therebetween, the word "transverse" referring to the sleeve rather than the circlip.

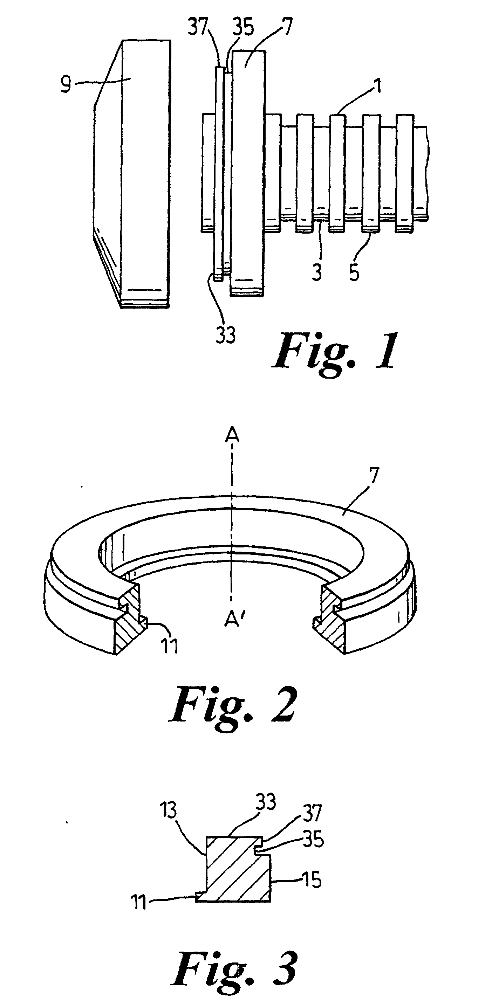

As best seen in Figures 2 and 3, circlip 7 has an generally square or rectangular cross-section and a circumferential extent of about 280 to 320°. It is made of a reasonably hard material, such as a plastics material and is provided with an internally directed flange 11 extending from one longitudinal edge of the circlip 7. The dimensions of the circlip 7 and the flange 11 are such that the circlip may be pushed fitted over the sleeve 1. During this process the flange 11 will locate within one of the grooves 3 of sleeve 1, the circlip will open slightly, and the sleeve will compress slightly, until the sleeve has passed fully into the circlip where it will be firmly engaged, with the circlip and sleeve resuming their original shapes. The outer diameter of the projections 5 on the sleeve and the inner diameter of the circlip 7 are such that the sleeve is a snug fit within the circlip once it has snapped into position with flange 11 located within a groove 3.

During installation of the duct assembly, the sleeve, having been positioned in a wall or partition traversing location, and with one end secured (typically by another sleeve end arrangement similar to that being currently described), will then extend out of the other side of the wall or partition. The sleeve may be pulled tight and then the circlip located in position with its radial edge 13 flush against the wall or partition. The sleeve may then be severed at a position flush to the other radial edge 15.

Accordingly the sleeve extends out of the wall or partition by only the thickness of the circlip and it lies wholly within the circlip.

The severing of the sleeve 1 may be carried out by means of an appropriate sharp knife. Alternatively, the circlip may be provided with a radially inwardly extending sharp projection (not shown) of a radial length sufficient to extend across the wall of the sleeve. When the circlip is snapped into position about the sleeve this projection will pierce the sleeve. Subsequent rotation of the circlip will cause the sleeve to be cut about its entire periphery.

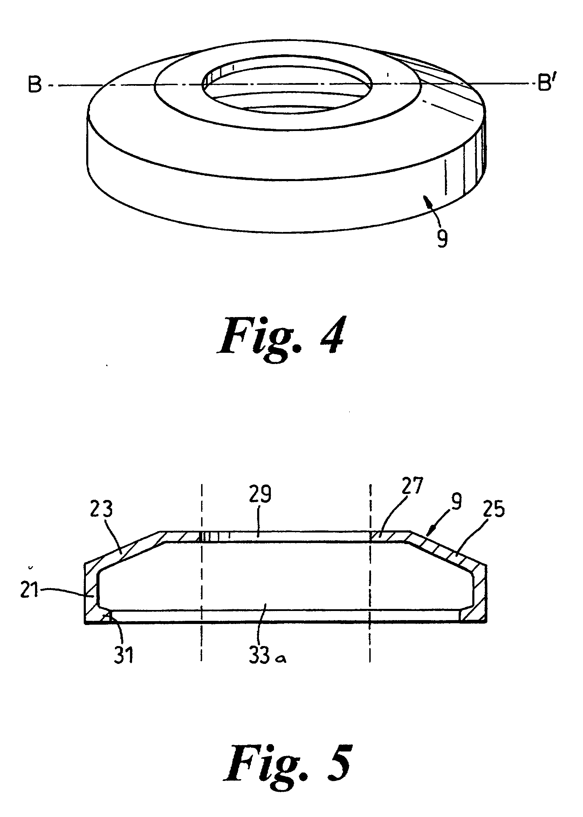

With the circlip 7 in position about sleeve 1, the next step is to locate end cap 9 on to circlip 7. As best seen in Figures 4 and 5, end cap 9 is a ring or annulus having a longitudinally extending, circumferential portion 21 and, integral therewith and extending inwardly therefrom, a radial face portion 23 which includes a section 25 connected to portion 21 and sloping inwardly away from portion 21 and, extending radially inwardly therefrom, an inner section 27. Section 27 defines, at its innermost, a circular aperture 29 of diameter similar to, or somewhat less than, the internal diameter of sleeve 1.

As shown in Figure 5, portion 21 of end cap 9 is provided, at its free edge with a small, inwardly directed flange 31 which defines an aperture 33.

Referring again to the circlip 7, there is, extending longitudinally from the main body of the circlip, an integral projection 33 which is provided with an externally grooved portion 35 and whose maximum diameter, adjacent said grooved portion 35, is at 37 and which is slightly less than the maximum diameter of the main body of circlip 7. The diameter at 37 is slightly greater than the diameter of the aperture 33a defined by flange 31 of end cap 9. Due to the nature of the materials of end cap 9 and circlip 7 (typically hard but slightly resilient plastics material), the end cap 9 may be pushed into engagement with circlip 7 by a snap-fit connection. When so engaged, flange 31 of end cap 9 will be located in grooved portion 35 of circlip 7.

With the end cap 9 in place, the only item seen from the exterior of the wall or partition is the external surface of the end cap which provides a neat and pleasing appearance.

Since the only item, apart from the pipe or cable running through sleeve 1, located within the wall or partition is sleeve 1, the diameter of the hole extending through the wall or partition need be only sufficient to accommodate sleeve 1.

The drawings illustrate an assembly, for example provided as a kit, consisting only of a sleeve 1 and end arrangement members (i.e. a circlip 7 and end cap 9) for one or both ends of the sleeve. In other embodiments the product of the invention includes additional components, for example a part annular cable lock may be placed around a cable passing through an installed duct at a location outside the duct, and press fitted into the aperture 29 of an end cap 9. Additionally or alternatively the product of the invention may include an externally flanged collar which, after the sleeve 1 has been placed in a wall or partition, is located around an end of the sleeve 1 and then pushed along the sleeve 1 until the flange is flush with the wall or partition surface. The circlip 7 is then pushed over the sleeve 1 adjacent the flanged collar to hold the flanged collar in place against the wall or partition. In other words, the flanged collar is positioned intermediate the circlip 7 and the wall or partition when the circlip 7 (part annular collar 7) is mounted on the sleeve 1 where the sleeve 1 emerges from the wall or partition. Typically, if the product includes a cable lock or a flanged collar it includes one for each end of the duct.

## Claims

1. A duct assembly comprising an externally grooved, plastics sleeve (1) and at least one sleeve end arrangement, which arrangement includes a collar (7) having an internal groove-engaging portion (11) and, engageable with said collar, an annular end cap (9) **characterised in that** the collar is part annular and the end cap (9) and the part annular collar (7) are engageable by means of a snap fit connection therebetween the snap fit connection being achieved by engagement between an integral, axially extending and peripherally grooved extension (33) of said collar (7) with an integral, internal peripheral flange (31) provided on the end cap (9).

2. A duct assembly of claim 1 in which the part annular collar (7) and the end cap (9) are made of plastics material.

3. A duct assembly of claim 1 or claim 2 which consists only of a sleeve (1) and, for each end of the duct, a part annular collar (7) and an end cap (9).

4. A duct assembly of any of claims 1 to 3 in which the collar (7) is provided with a radially inwardly extending sharp projection of a radial length sufficient to extend across the wall of the sleeve.

5. A method of installing a wall- or partition-traversing duct for a cable or pipe according to any of claims 1 to 4, the method comprising providing a length of externally grooved plastics sleeve (1) in a wall or partition traversing location, mounting a part annular collar (7) having a groove engaging portion (11) on the sleeve (1) where it emerges from one side of the wall or partition, severing the sleeve (1) flush to said collar (7) and mounting an annular end cap (9) on said collar, said collar (7) and said end cap (9) being engageable with each other.

6. A method of claim 5 in which the collar (7) and end cap (9) are made of plastics material .

## Patentansprüche

1. Durchführungseinheit, umfassend ein außen gerilltes Plastikrohr (1) und zumindest eine Endrohrvorrichtung, wobei die Endrohrvorrichtung einen Bügel (7) mit einem innen gerillten Eingriffsteil (11) und, mit dem Bügel in Eingriff bringbar, eine ringförmige Endkappe (9) enthält, **dadurch gekennzeichnet, daß** der Bügel teilweise ringförmig ist und daß die Endkappe (9) und der teilweise ringförmige Bügel (7) durch zwischen ihnen angeordnete Mittel einer Schnappverbindung in Eingriff bringbar sind, wobei die Schnappverbindung durch einen Eingriff zwischen einem integralen, sich axial erstreckenden und am Umfang gerillten Vorsprung (33) des Bügels(7) mit einem integralen, inneren Umfangsflansch (31) erzielt wird, der an der Endkappe (9) angeordnet ist.

2. Durchführungseinheit nach Anspruch 1, in der der teilweise ringförmige Bügel (7) und die Endkappe (9) aus Plastikmaterial hergestellt sind.

3. Durchführungseinheit nach Anspruch 1 oder 2, die nur aus einem Rohr (1) und, für jedes Ende der Durchführung, einem teilweise ringförmigen Bügel (7) und einer Endkappe (9) besteht.

4. Durchführungseinheit nach einem der Ansprüche 1 bis 3, in der der Bügel (7) mit einem radialen, sich nach innen erstreckenden spitzen Vorsprung mit einer radialen Länge ausgestattet ist, die ausreichend ist, um sich entlang der Wand des Rohrs zu erstrecken.

5. Verfahren zum Installieren einer Wand- oder Raumteilerdurchführung für ein Kabel oder ein Rohr nach einem der Ansprüche 1 bis 4, wobei das Verfahren Zurverfügungstellen eines Abschnittes eines außen gerillten Plastikrohres (1) in einer Wand oder einem Raumteiler, der einen Ort durchquert, Montieren eines teilweise ringförmigen Bügels (7) mit einem gerillten Eingriffsteil (11) an dem Rohr (1), wo es von einer Seite der Wand oder des Raumteilers herauskommt, Trennen des Rohres (1) bündig mit dem Bügel (7) und Montieren einer ringförmigen Endkappe (9) an dem Bügel umfaßt, wobei der Bügel (7) und die Endkappe (9) miteinander in Eingriff bringbar sind.

6. Verfahren nach Anspruch 5, in dem der Bügel (7) und die Endkappe (9) aus Plastikmaterial hergestellt sind.

## Revendications

1. Assemblage de tuyauterie comprenant un manchon (1) en plastique comportant une rainure, et au moins un ensemble d'extrémité de manchon, lequel inclus un collier (7) présentant une partie (11) à engagement avec une rainure interne et en engagement possible avec ledit collier, un capuchon (9) terminal annulaire, **caractérisé en ce que** le collier est en partie annulaire, et **en ce que** le capuchon (9) terminal et le collier en partie annulaire (7) sont susceptibles d'être mis en engagement au moyen d'une connexion à encliquetage entre ces derniers, la connexion à encliquetage étant réalisée par engagement entre une extension (33) intégrale, s'étendant axialement et pourvue d'une gorge périphérique, dudit collier (7) avec un flanc (31) périphérique interne, intégral, disposé sur le capuchon (9) terminal.

2. Assemblage de tuyauterie selon la revendication 1, **caractérisé en ce que** le collier partiellement annulaire (7) et le capuchon terminal (9) sont réalisés en matériau plastique.

3. Assemblage de tuyauterie selon la revendication 1 ou 2, **caractérisé en ce qu'**il inclut un manchon (1) et, pour chaque extrémité de la tuyauterie, un collier (7) partiellement annulaire et un capuchon terminal (9).

4. Assemblage de tuyauterie selon l'une des revendications 1 à 3, **caractérisé en ce que** le collier (7) est pourvu d'une partie en saillie pointue, s'étendant vers l'intérieur et radialement, d'une longueur radiale suffisante pour s'étendre au travers de la paroi du manchon.

5. Procédé d'installation d'un conduit traversant une paroi ou un mur, pour un câble ou tuyau, selon l'une des revendications 1 à 4, le procédé comprenant l'étape de fournir une longueur de manchon (1) en plastique, dans une zone traversant une paroi ou un mur, monter un collier partiellement annulaire présentant une partie d'engagement à rainure (11) sur le manchon, où il émerge d'un côté de la paroi ou du mur, séparant le manchon (1) en affleurant ledit collier (7), et l'étape de monter un capuchon (9) terminal annulaire sur ledit collier, ledit collier (7) et ledit capuchon terminal (9) étant susceptibles d'être en engagement l'un avec l'autre.

6. Procédé selon la revendication 5, **caractérisé en ce que** le collier (7) et le capuchon terminal (9) sont réalisés en matériau plastique.
